# EUROPEAN PATENT SPECIFICATION

(11) **EP 4 594 128 B1**
(45) Date of publication and mention of the grant of the patent: **12.08.2026**
(21) Application number: 23776704.1
(22) Date of filing: 14.09.2023
(51) Int. Cl.: B60L 3/00, B60L 3/04, H01R 13/641, H01R 13/629, H01R 13/70, H01R 24/28

(54) **SWITCH DEVICE FOR HAZARDOUS VOLTAGE INTERLOCKLOOP**
SCHALTVORRICHTUNG FÜR EINE SICHERHEITSSPANNUNGSVERRIEGELUNGSSCHLEIFE
DISPOSITIF DE COMMUTATION POUR BOUCLE DE VERROUILLAGE MUTUEL DE TENSION DANGEREUSE

(30) Priority: 30.09.2022 CN 202211214009
(43) Date of publication of application: 06.08.2025
(73) Proprietor: HARTING Electric Stiftung & Co. KG, 32339 Espelkamp (DE)
(72) Inventor: SHENG, Jiang, 32339 Espelkamp (DE)
(74) Representative: noventive Patentanwaltsgesellschaft mbH
(86) International application number: PCT/IB2023/059114
(87) International publication number: WO 2024/069301

(56) References cited:
- EP-B1- 3 591 769
- CN-A- 104 577 552
- CN-A- 114 498 193
- CN-U- 207 602 930
- US-A1- 2015 318 640
- US-B2- 10 811 822

## Description

### Technical Field

The present invention generally relates to the field of high voltage inter-lock, and in particular to a switch device for a hazardous voltage interlockloop.

### Background

Currently, in order to ensure the safety of a high voltage system, a high voltage inter-lock (HVIL for short) system is proposed, which may also be referred to as a hazardous voltage interlockloop. The high voltage inter-lock can be applied to the fields of energy storage, new energy automobiles, etc. For example, in a high voltage circuit of an electric vehicle, main electrical elements in the high voltage inter-lock system are connected at a high voltage. On the one hand, when a circuit of a high voltage system is disconnected or the integrity thereof is damaged, the high voltage inter-lock starts a protection measure for safely disconnecting the high voltage power; and on the other hand, the high voltage inter-lock is used for confirming the integrity of the whole high voltage system. Therefore, a high voltage inter-lock circuit is a safety function of hybrid electric vehicles and all-electric vehicles, can ensure the safety of an operating personnel during vehicle assembly, repair, maintenance and operation, and can ensure the life safety of any personnel who may contact a high voltage assembly at any stage of the lifecycle of the electric vehicle.

Therefore, the high voltage inter-lock design is mainly used to ensure the safety of the high voltage system, and mainly has the following three functions:
1) for detecting loosening of the high voltage circuit (loosening of the high voltage circuit may lead to high voltage power cut, the whole vehicle loses power, thereby affecting the safety of vehicle driving), and providing alarm information to a vehicle control unit before the high voltage power cut, so as to reserve time for the whole vehicle to take countermeasures;
2) playing a role before the vehicle is powered on for driving, and if it is detected that the circuit is incomplete, the system cannot be powered on, thereby avoiding an accident caused by problems such as virtual connection; and
3) preventing a safety accident caused by manual misoperation; during working of the high voltage system, if there is no high voltage inter-lock design, a high voltage connection point is manually disconnected; and at the moment of disconnection, the entire circuit voltage is applied at two ends of the breakpoint, and the voltage breaks down the air and forms an arc between two devices; although the time is short, the energy is high, which may cause harm to persons and apparatuses surrounding the breakpoint.

In the related art, in order to realize high voltage inter-lock, multiple technical means are used. For example, a high voltage contact is designed to be longer than a control contact, disconnection of the control contact from an associated pairing contact is detected when a plug device is released, and upon detection of disconnection, high voltage cut-off at the high voltage connection point is started. However, a disadvantage of the related art is that the system requires voltage control at a plug side of a specific contact. This may limit compatibility with other plug systems, at least limit the occupation of contacts. In particular, the contact used to transmit a control voltage has permanently occupied the plug system, and therefore is not free to use.

Document CN 114 498 193 A discloses a high-voltage connector with an interlock system where operating a locking lever causes the entire plug housing to slide forward. A part of this sliding housing then pushes a pressing unit located in the socket to close the low-voltage interlock circuit. The actuation is indirect, as the lever moves the entire connector body rather than directly contacting the pressing unit.

Document CN 207 602 930 U describes a high-voltage connector where the interlock is actuated by a micro switch. The socket housing contains the micro switch, while the plug housing features a protruding block. During mating, this block on the plug presses the actuator of the micro switch to close the interlock circuit.

Documents US 2015/318640 A1, CN 104 577 552 A, EP 3 591 769 B1 and US 10 811 822 B2 represent general background art in the field of high-voltage connectors. They disclose various designs for locking levers and interlock systems.

### Summary

An object of the present invention is to provide a switch device for a hazardous voltage interlockloop, which reliably ensures load-free disconnection. The switch device can ensure that an information transfer action of a low-voltage detection circuit precedes a disconnection action of a high voltage circuit.

According to one aspect of the present invention, a switch device for a hazardous voltage interlockloop is provided, comprising: a first connector, provided at an input end of the hazardous voltage interlockloop; and a second connector, provided at an output end of the hazardous voltage interlockloop, the second connector being capable of being fitted to the first connector; the first connector comprises a locking lever, the locking lever being pivotably provided on a housing of the first connector, and the second connector comprises a pressing unit, a movable contact, and an elastic unit, wherein when the first connector and the second connector are in a fitted state, the locking lever abuts against the pressing unit, when the locking lever is pivoted to a locked position, the pressing unit moves to a first position in a linked manner, and the pressing unit enables the elastic unit to be in a compressed state, and the movable contact is in contact with a low-voltage detect contact of the switch device; and when the locking lever is pivoted to an unlocked position, the pressing unit moves to a second position in a linked manner, and the elastic unit is in an extended state, and the movable contact is separated from the low-voltage detect signal contact.

Preferably, when the locking lever is pivoted to the locked position, the pressing unit moves downwards to the first position, and the pressing unit enables the elastic unit to be in the compressed state, the movable contact moves downwards to contact the low-voltage detect signal contact, and in response to the movable contact contacting the low-voltage detect signal contact, a high voltage inter-lock circuit of the hazardous voltage interlockloop is in electrical conduction.

Preferably, when the locking lever is pivoted to the unlocked position, the pressing unit moves upwards to the second position, the elastic unit is in the extended state, the movable contact moves upwards to be separated from the low-voltage detect signal contact, and in response to the movable contact being separated from the low-voltage detect signal contact, a high voltage inter-lock circuit of the hazardous voltage interlockloop is in electrical disconnection.

Preferably, the switch device further comprises: a waterproof unit, the waterproof unit being arranged between the pressing unit and the movable contact.

Preferably, the movable contact is sleeved on the elastic unit.

Preferably, the elastic unit comprises a spring.

Preferably, the first connector further comprises: a position holding unit, the position holding unit being configured to hold the locking lever in the locked position or the unlocked position.

Preferably, the position holding unit releases position locking of the locking lever by a rotational force applied by an operator to the locking lever.

Preferably, the position holding unit releases position locking of the locking lever by a pressing force by an operator to the position holding unit.

Preferably, an included angle between the locked position and the unlocked position is 90 degrees.

As can be determined from the solutions above, a novel switch device for a hazardous voltage interlockloop, which has a locking lever is provided. The switch device enables a pressing system having an elastic element to match the locking lever, thereby implementing on and off functions of disconnection and conduction an HVIL circuit, ensuring that an information transfer action of a low-voltage detection circuit precedes a disconnection action of a high voltage circuit, thereby ensuring the safety of the high voltage system.

### Brief Description of the Drawings

Hereinafter, preferred embodiments of the present invention will be described in detail with reference to the accompanying drawings, such that a person of ordinary skill in the art could understand the described and other features and advantages of the present invention more clearly, in which:
Fig. 1 is a schematic diagram of a first connector and a second connector of a switch device being in a fitted state according to the present invention.
Fig. 2 is a schematic diagram of a first connector and a second connector of a switch device being in a separated state according to the present invention.
Fig. 3 is a schematic exploded diagram of a locking lever of a first connector, and a pressing unit, a waterproof unit, a movable contact and an elastic unit of a second connector of a switch device according to the present invention.
Fig. 4 is a schematic diagram of a switch device according to the present invention when a locking lever of a first connector of the switch device is in an unlocked position.
Fig. 5 is a schematic diagram of a switch device according to the present invention when a locking lever of a first connector of the switch device is in a locked position.

### Detailed Description of the Embodiments

To make the objectives, technical solutions, and advantages of the present invention clearer, hereinafter, the present invention is further described in detail by taking embodiments as examples.

It is to be illustrated that embodiments and the features in the embodiments of the present application can be combined with one another without conflicts. Hereinafter, the present invention will be described in detail with reference to the drawings in combination with embodiments.

It is to be noted that unless otherwise indicated, all technical and scientific terms used in the present application have the same meanings as those commonly understood by a person of ordinary skill in the art to which the present application belongs.

In the present invention, unless specified to the contrary, directional terms such as "upper, lower, top, and bottom" are generally used regarding the directions shown in the figures, or for the components themselves in vertical, perpendicular, or gravity directions; likewise, for ease of understanding and description, "inner and outer" refers to the inner and outer relative to the outline of each component itself, but the described directional terms are not used to limit the present invention.

In the drawings, the same reference signs are used to refer to the same elements.

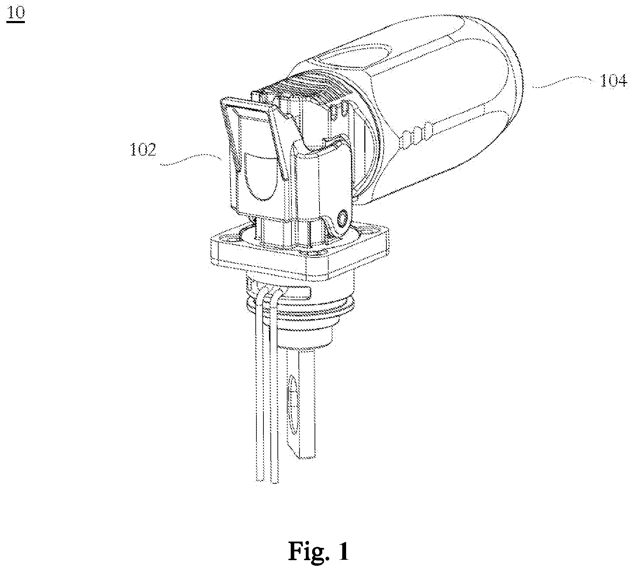

Fig. 1 is a schematic diagram of a first connector and a second connector of a switch device being in a fitted state according to the present invention. As shown in Fig. 1, a switch device 10 for a hazardous voltage interlockloop comprises: a first connector 102, provided at an input end of the hazardous voltage interlockloop, for example, which can be provided at an energy storage apparatus side; and a second connector 104, provided at an output end of the hazardous voltage interlockloop, for example, at a power output side, wherein the second connector 104 can be fitted to the first connector 102 mechanically, for example. For example, by matching a male end of the first connector 102 with a female end of the second connector 104, the second connector 104 can be fitted to the first connector 102.

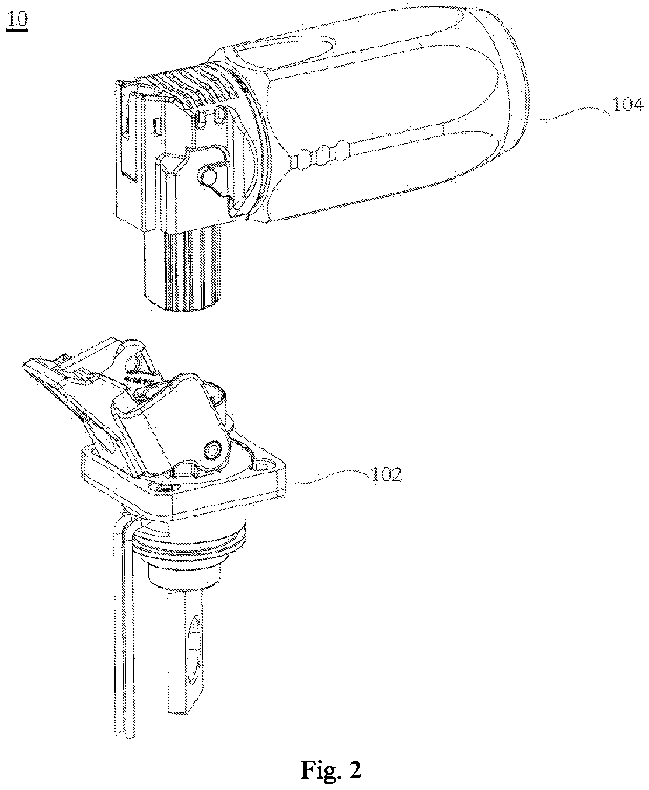

Fig. 2 is a schematic diagram of a first connector and a second connector of a switch device being in a separated state according to the present invention. As shown in Fig. 2, a switch device 10 for a hazardous voltage interlockloop comprises: a first connector 102, provided at an input end of the hazardous voltage interlockloop, for example, which can be provided at an energy storage apparatus side; and a second connector 104, provided at an output end of the hazardous voltage interlockloop, for example, at a power output side, wherein the second connector 104 can be fitted to or decoupled from the first connector 102 mechanically, for example. For example, by separating the male end of the first connector 102 from the female end of the second connector 104, the second connector 104 can be separated from the first connector 102.

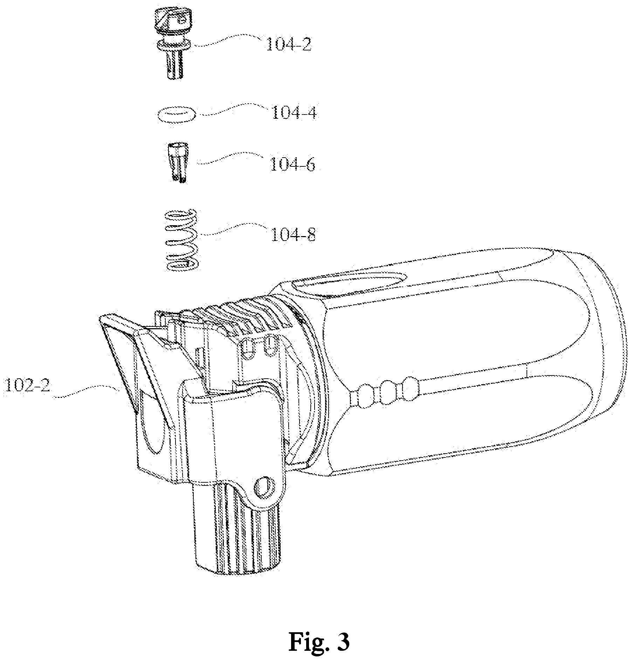

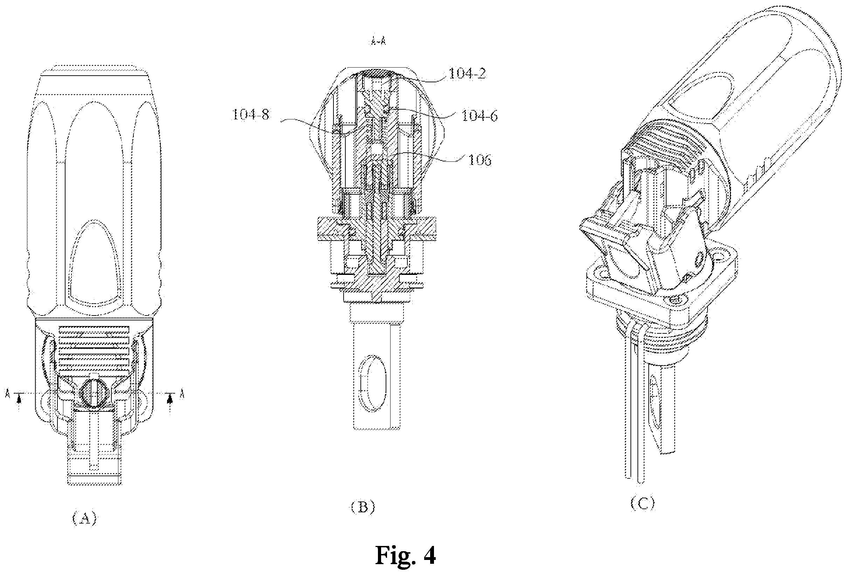

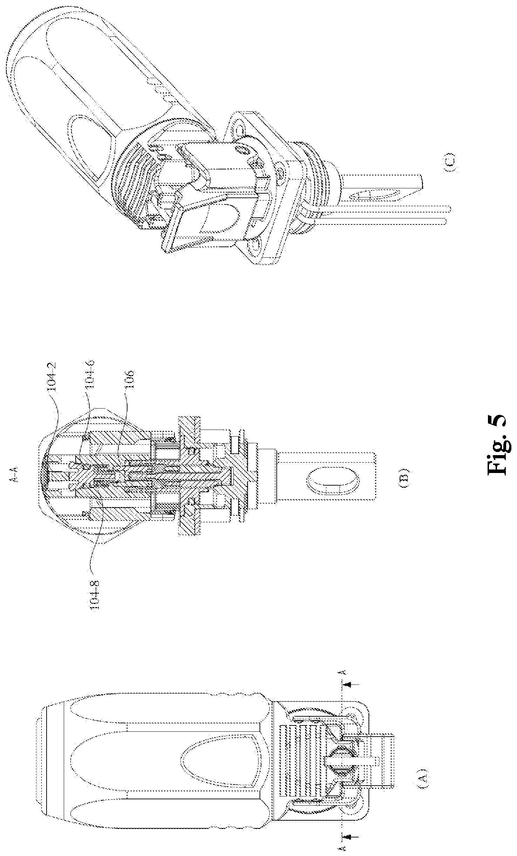

Fig. 3 is a schematic exploded diagram of a locking lever of a first connector, and a pressing unit, a waterproof unit, a movable contact and an elastic unit of a second connector of a switch device according to the present invention. As shown in Fig. 3, a locking lever 102-2 can, for example, be pivotably provided on a housing of the first connector 102. In addition, the second connector may comprise a pressing unit 104-2, a waterproof unit 104-4, a movable contact 104-6, and an elastic unit 104-8. As shown in Fig. 3, the waterproof unit 104-4 is arranged between the pressing unit 104-2 and the movable contact 104-6, and the movable contact 104-6 is sleeved on the elastic unit 104-8. When the second connector 104 and the first connector 102 are in a fitted state, the locking lever 102-2 abuts against the pressing unit 104-2, so that the positions of the pressing unit 104-2, the movable contact 104-6, and the elastic unit 104-8 of the second connector 104 change according to the displacement of the locking lever 102-2 of the first connector 102. Hereinafter, how positions of the pressing unit 104-2, the movable contact 104-6, and the elastic unit 104-8 of the second connector 104 change according to the displacement of the locking lever 102-2 of the first connector 102 will be described in detail with reference to Figs. 4 and 5.

Fig. 4 is a schematic diagram of a switch device according to the present invention when a locking lever of a first connector of the switch device is in an unlocked position. (A) of Fig. 4 is a top view of the switch device when the locking lever 102-2 of the first connector in an unlocked position; (B) of Fig. 4 is a cross-sectional view taken along A-A in (A); and (C) of Fig. 4 is a side view of the switch device when the locking lever 102-2 of the first connector is in an unlocked position. As shown in (B) of Fig. 4, when the locking lever 102-2 of the first connector is in an unlocked position, the pressing unit 104-2 abutting against the locking lever 102-2 is in an open position, and the pressing unit 104-2 does not apply a pressure to the elastic unit 104-8; therefore, the elastic unit 104-8 is in an extended state, the movable contact 104-6 sleeved on the elastic unit 104-8 is separated from a low-voltage detect signal contact 106, and in response to the movable contact 104-6 being separated from the low-voltage detect signal contact 106, a high voltage inter-lock circuit (not shown) of the hazardous voltage interlockloop is in electrical disconnection.

Fig. 5 is a schematic diagram of a switch device according to the present invention when a locking lever of a first connector of the switch device is in a locked position. (A) of Fig. 5 is a top view of the switch device when the locking lever 102-2 of the first connector in a locked position; (B) of Fig. 5 is a cross-sectional view taken along A-A in (A); and (C) of Fig. 5 is a side view of the switch device when the locking lever 102-2 of the first connector is in a locked position. As shown in (B) of Fig. 5, when the locking lever 102-2 of the first connector is in the locked position, the pressing unit 104-2 abutting against the locking lever 102-2 is in a conduction position (for example, under the linking action of the locking lever 102-2 of the first connector pivoting to the locked position, the pressing unit 104-2 abutting against the locking lever 102-2 of the first connector moves downwards to the conduction position), and the pressing unit 104-2 applies a pressure to the elastic unit 104-8; therefore, the elastic unit 104-8 is in a compressed state, the movable contact 104-6 sleeved on the elastic unit 104-8 contacts the low-voltage detect signal contact 106, and in response to the movable contact 104-6 contacting the low-voltage detect signal contact 106, the high voltage inter-lock circuit (not shown) of the hazardous voltage interlockloop is in electrical conduction.

In the switch device for a hazardous voltage interlockloop disclosed in the present application, the waterproof unit may comprise an O-ring. In addition, the elastic unit may comprise a spring.

In order to avoid misoperation, the switch device for a hazardous voltage interlockloop disclosed in the present application can further comprise a position holding unit, which holds the locking lever in the locked position or the unlocked position. For example, the position holding unit releases position locking of the locking lever by an operator applying a force greater than a predetermined threshold to the locking lever. Moreover, the position holding unit releases position locking of the locking lever by the operator applying a pressing force to the position holding unit. An included angle between the locked position and the unlocked position of the locking lever may be 90 degrees.

In this way, the high voltage circuit does not become a conduction state until the movable contact 104-6 contacts the low-voltage detect signal contact 106. That is to say, the high voltage circuit changes to a conduction state only when the locking lever is in the locked position and the pressing unit is in the conduction position. Therefore, a time interval in an operation of the locking lever from a second operation position to a first operation position, i.e. time lag from cutting off a signal circuit switch to cutting off a main circuit switch, can be ensured. Therefore, malfunctions such as sparks caused by residual electric power after cutting off the signal circuit switch do not occur.

## Claims

1. A switch device (10) for a hazardous voltage interlockloop, the switch device comprising:
a first connector (102), provided at an input end of the hazardous voltage interlockloop; and
a second connector (104), provided at an output end of the hazardous voltage interlockloop, the second connector (104) being capable of being fitted to the first connector (102);
the first connector (102) comprises a locking lever (102-2) the locking lever (102-2) being pivotably provided on a housing of the first connector (102), and
the second connector (104) comprises a pressing unit (104-2), a movable contact (104-6), and an elastic unit (104-8),
**characterized in that**
when the first connector (102) and the second connector (104) are in a fitted state, the locking lever (102-2) abuts against the pressing unit (104-2),
when the locking lever (102-2) is pivoted to a locked position, the pressing unit (104-2) moves to a first position in a linked manner, and the pressing unit (104-2) enables the elastic unit (104-8) to be in a compressed state,
and the movable contact (104-6) is in contact with a low-voltage detect contact (106) of the switch device (10); and
when the locking lever (102-2) is pivoted to an unlocked position, the pressing unit (104-2) moves to a second position in a linked manner, and the elastic unit i (104-2) is in an extended state, and the movable contact (104-6) is separated from the low-voltage detect signal contact (106).

2. The switch device for a hazardous voltage interlockloop according to claim 1, wherein
when the locking lever is pivoted to the locked position, the pressing unit moves downwards to the first position, and the pressing unit enables the elastic unit to be in the compressed state, the movable contact moves downwards to contact the low-voltage detect signal contact, and in response to the movable contact contacting the low-voltage detect signal contact, a high voltage inter-lock circuit of the hazardous voltage interlockloop is in electrical conduction.

3. The switch device for a hazardous voltage interlockloop according to claim 1, wherein
when the locking lever is pivoted to the unlocked position, the pressing unit moves upwards to the second position, the elastic unit is in the extended state, the movable contact moves upwards to be separated from the low-voltage detect signal contact, and in response to the movable contact being separated from the low-voltage detect signal contact, a high voltage inter-lock circuit of the hazardous voltage interlockloop is in electrical disconnection.

4. The switch device for a hazardous voltage interlockloop according to any one of claims 1-3, wherein the switch device further comprises: a waterproof unit, the waterproof unit being arranged between the pressing unit and the movable contact.

5. The switch device for a hazardous voltage interlockloop according to any one of claims 1-3, wherein the movable contact is sleeved on the elastic unit.

6. The switch device for a hazardous voltage interlockloop according to claim 1, wherein the elastic unit comprises a spring.

7. The switch device for a hazardous voltage interlockloop according to claim 1, wherein the first connector further comprises: a position holding unit, the position holding unit being configured to hold the locking lever in the locked position or the unlocked position.

8. The switch device for a hazardous voltage interlockloop according to claim 7, wherein the position holding unit releases position locking of the locking lever by a rotational force applied by an operator to the locking lever.

9. The switch device for a hazardous voltage interlockloop according to claim 7, wherein the position holding unit releases position locking of the locking lever by a pressing force by an operator to the position holding unit.

10. The switch device for a hazardous voltage interlockloop according to claim 1, wherein an included angle between the locked position and the unlocked position is 90 degrees.

## Patentansprüche

1. Schaltvorrichtung (10) für eine Verriegelungsschleife für gefährliche Spannung, die Schaltvorrichtung umfassend:
einen ersten Verbinder (102), der an einem Eingangsende der Verriegelungsschleife für gefährliche Spannung bereitgestellt ist; und
einen zweiten Verbinder (104), der an einem Ausgangsende der Verriegelungsschleife für gefährliche Spannung bereitgestellt ist, wobei der zweite Verbinder (104) in der Lage ist, an den ersten Verbinder (102) angepasst zu werden;
wobei der erste Verbinder (102) einen Verriegelungshebel (102-2) umfasst, der Verriegelungshebel (102-2) an einem Gehäuse des ersten Verbinders (102) schwenkbar bereitgestellt ist, und
der zweite Verbinder (104) eine Druckeinheit (104-2), einen beweglichen Kontakt (104-6) und eine elastische Einheit (104-8) umfasst,
**dadurch gekennzeichnet, dass**
wenn sich der erste Verbinder (102) und der zweite Verbinder (104) in einem angepassten Zustand befinden, der Verriegelungshebel (102-2) an der Druckeinheit (104-2) anliegt,
wenn der Verriegelungshebel (102-2) in eine verriegelte Position geschwenkt wird, sich die Druckeinheit (104-2) in einer gekoppelten Weise in eine erste Position bewegt, und die Druckeinheit (104-2) es der elastischen Einheit (104-8) ermöglicht, sich in einem komprimierten Zustand zu befinden, und der bewegliche Kontakt (104-6) in Kontakt mit einem Niederspannungserfassungskontakt (106) der Schaltvorrichtung (10) steht; und
wenn der Verriegelungshebel (102-2) in eine entriegelte Position geschwenkt wird, sich die Druckeinheit (104-2) in einer gekoppelten Weise in eine zweite Position bewegt, und die elastische Einheit (104-2) sich in einem ausgedehnten Zustand befindet, und der bewegliche Kontakt (104-6) von dem Niederspannungserfassungssignalkontakt (106) getrennt ist.

2. Schaltvorrichtung für eine Verriegelungsschleife für gefährliche Spannung nach Anspruch 1, wobei, wenn der Verriegelungshebel in die verriegelte Position geschwenkt wird, sich die Druckeinheit nach unten in die erste Position bewegt, und die Druckeinheit ermöglicht, dass sich die elastische Einheit in dem komprimierten Zustand befindet, sich der bewegliche Kontakt nach unten bewegt, um den Niederspannungserfassungssignalkontakt zu kontaktieren, und als Reaktion darauf, dass der bewegliche Kontakt den Niederspannungserfassungssignalkontakt kontaktiert, sich ein Hochspannungsverriegelungskreis der Verriegelungsschleife für gefährliche Spannung in elektrischer Leitung befindet.

3. Schaltvorrichtung für eine Verriegelungsschleife für gefährliche Spannung nach Anspruch 1, wobei, wenn der Verriegelungshebel in die entriegelte Position geschwenkt wird, sich die Druckeinheit nach oben in die zweite Position bewegt, die elastische Einheit in dem ausgedehnten Zustand ist, sich der bewegliche Kontakt nach oben bewegt, um von dem Niederspannungserfassungssignalkontakt getrennt zu werden, und als Reaktion darauf, dass der bewegliche Kontakt von dem Niederspannungserfassungssignalkontakt getrennt wird, sich ein Hochspannungsverriegelungskreis der Verriegelungsschleife für gefährliche Spannung in elektrischer Trennung befindet.

4. Schaltvorrichtung für eine Verriegelungsschleife für gefährliche Spannung nach einem der Ansprüche 1 bis 3, wobei die Schaltvorrichtung ferner umfasst: eine wasserdichte Einheit, wobei die wasserdichte Einheit zwischen der Druckeinheit und dem beweglichen Kontakt angeordnet ist.

5. Schaltvorrichtung für eine Verriegelungsschleife für gefährliche Spannung nach einem der Ansprüche 1 bis 3, wobei der bewegliche Kontakt auf die elastische Einheit aufgeschoben ist.

6. Schaltvorrichtung für eine Verriegelungsschleife für gefährliche Spannung nach Anspruch 1, wobei die elastische Einheit eine Feder umfasst.

7. Schaltvorrichtung für eine Verriegelungsschleife für gefährliche Spannung nach Anspruch 1, wobei der erste Verbinder ferner umfasst: eine Positionshaltungseinheit, wobei die Positionshaltungseinheit konfiguriert ist, um den Verriegelungshebel in der verriegelten Position oder der entriegelten Position zu halten.

8. Schaltvorrichtung für eine Verriegelungsschleife für gefährliche Spannung nach Anspruch 7, wobei die Positionshaltungseinheit die Positionsverriegelung des Verriegelungshebels durch eine durch einen Bediener auf den Verriegelungshebel aufgebrachte Drehkraft freigibt.

9. Schaltvorrichtung für eine Verriegelungsschleife für gefährliche Spannung nach Anspruch 7, wobei die Positionshaltungseinheit die Positionsverriegelung des Verriegelungshebels durch eine Druckkraft durch einen Bediener auf die Positionshaltungseinheit freigibt.

10. Schaltvorrichtung für eine Verriegelungsschleife für gefährliche Spannung nach Anspruch 1, wobei ein eingeschlossener Winkel zwischen der verriegelten Position und der entriegelten Position 90 Grad beträgt.

## Revendications

1. Dispositif de commutation (10) pour une boucle d'interverrouillage à tension dangereuse, le dispositif de commutation comprenant :
un premier connecteur (102), fourni au niveau d'une extrémité d'entrée de la boucle d'interverrouillage de tension dangereuse ; et
un second connecteur (104), situé à une extrémité de sortie de la boucle d'interverrouillage de tension dangereuse, le second connecteur (104) pouvant être monté sur le premier connecteur (102) ;
le premier connecteur (102) comprend un levier de verrouillage (102-2), le levier de verrouillage (102-2) étant placé de manière pivotante sur un boîtier du premier connecteur (102), et
le second connecteur (104) comprend une unité de pression (104-2), un contact mobile (104-6) et une unité élastique (104-8),
**caractérisé en ce que**
lorsque le premier connecteur (102) et le second connecteur (104) sont dans un état ajusté, le levier de verrouillage (102-2) vient en butée contre l'unité de pression (104-2),
lorsque le levier de verrouillage (102-2) est pivoté dans une position verrouillée, l'unité de pressage (104-2) se déplace vers une première position de manière liée, et l'unité de pressage (104-2) permet à l'unité élastique (104-8) d'être dans un état comprimé, et le contact mobile (104-6) est en contact avec un contact de détection de basse tension (106) du dispositif de commutation (10) ; et
lorsque le levier de verrouillage (102-2) est pivoté dans une position déverrouillée, l'unité de pressage (104-2) se déplace vers une seconde position de manière liée, et l'unité élastique (104-2) est dans un état étendu, et le contact mobile (104-6) est séparé du contact de signal de détection de basse tension (106).

2. Dispositif de commutation destiné à une boucle d'interverrouillage de tension dangereuse selon la revendication 1, dans lequel, lorsque le levier de verrouillage pivote vers la position verrouillée, l'unité de pressage se déplace vers le bas jusqu'à la première position, et l'unité de pressage permet à l'unité élastique d'être à l'état comprimé, le contact mobile se déplace vers le bas pour entrer en contact avec la contact de signal de détection basse tension, et en réponse au contact du contact mobile avec le contact de signal de détection de basse tension, un circuit de verrouillage à haute tension de la boucle d'interverrouillage à tension dangereuse est en conduction électrique.

3. Dispositif de commutation destiné à une boucle d'interverrouillage de tension dangereuse selon la revendication 1, dans lequel, lorsque le levier de verrouillage pivote vers la position déverrouillée, l'unité de pression se déplace vers le haut jusqu'à la seconde position, l'unité élastique est à l'état étendu, le contact mobile se déplace vers le haut pour être séparé de la basse tension détecter un contact de signal, et en réponse à la séparation du contact mobile du contact de signal de détection basse tension, un circuit de verrouillage à haute tension de la boucle de verrouillage à tension dangereuse est en déconnexion électrique.

4. Dispositif de commutation pour une boucle d'interverrouillage de tension dangereuse selon l'une quelconque des revendications 1 à 3, dans lequel le dispositif de commutation comprend en outre : une unité étanche, l'unité étanche étant agencée entre l'unité de pression et le contact mobile.

5. Dispositif de commutation pour une boucle d'interverrouillage de tension dangereuse selon l'une quelconque des revendications 1 à 3, dans lequel le contact mobile est manchonné sur l'unité élastique.

6. Dispositif de commutation pour une boucle d'interverrouillage de tension dangereuse selon la revendication 1, dans lequel l'unité élastique comprend un ressort.

7. Dispositif de commutation pour une boucle d'interverrouillage à tension dangereuse selon la revendication 1, dans lequel le premier connecteur comprend en outre : une unité de maintien de position, l'unité de maintien de position étant conçue pour maintenir le levier de verrouillage dans la position verrouillée ou dans la position déverrouillée.

8. Dispositif de commutation pour une boucle d'interverrouillage de tension dangereuse selon la revendication 7, dans lequel l'unité de maintien de position libère le verrouillage de position du levier de verrouillage par une force de rotation appliquée par un opérateur au levier de verrouillage.

9. Dispositif de commutation pour une boucle d'interverrouillage de tension dangereuse selon la revendication 7, dans lequel l'unité de maintien de position libère le verrouillage de position du levier de verrouillage par une force de pression d'un opérateur sur l'unité de maintien de position.

10. Dispositif de commutation destiné à une boucle d'interverrouillage à tension dangereuse selon la revendication 1, dans lequel un angle inclus entre la position verrouillée et la position déverrouillée est de 90 degrés.
